# EUROPEAN PATENT APPLICATION

(11) **EP 0 529 367 A1**
(43) Date of publication of application: **03.03.1993**
(21) Application number: 92113428.4
(22) Date of filing: 06.08.1992
(51) Int. Cl.: B29C 51/32

(54) **Cut-in-place, melt-phase forming method and apparatus**

(30) Priority: 27.08.1991 US 750368
(71) Applicant: BALL CORPORATION, Muncie Indiana 47302 (US)
(72) Inventor: Caner, Ali Riza, Muncie, Indiana 47304 (US)
(74) Representative: Wagner, Karl H., Dipl.-Ing.

(57) **Abstract**

A precise flange is formed about a plastic container in a single operation by providing cooperating coining and cooling surfaces (14A,18A) into two mold elements that are surrounded by a cutting die (26). The flange is formed by deforming a thermoplastic container-forming material (25), which has been heated above its glass transition temperature, between the coining and cooling surfaces to coin and form the flange to a predetermined precise shape and thickness. Thereafter the coining and cooling surfaces are moved together while clamping and maintaining the thermoplastic material at the predetermined coining thickness within the cutting die to cut the flange with a precise diameter. Such methods and apparatus are particularly useful for the formation of plastic containers which can be sealed by double seaming.

## Description

### Field of the Invention

This invention relates to a method and apparatus for the formation of a plastic container with an opening adapted for sealing to a closure, and more particularly relates to a method and apparatus for manufacture of a double seamable plastic container flange that is coined and trimmed from a plastic web work with precise flange dimensions in a single operation and apparatus.

### Background of the Invention

Double-seamed food packages have become increasingly popular because of the convenience of preparing a meal in the package with a microwave range. Closing a plastic container by double seaming a flange surrounding its opening to a closure provides pressure resistance needed for cooking in the closed container.

Double seamable plastic containers, however, require very close flange widths and thicknesses to maintain a reliable seal; typically flange widths must be maintained within a tolerance of plus or minus 5 thousandths of an inch. To obtain such tolerances, the manufacture of double seamable plastic containers has required a three step operation including two trimming steps after the container forming operation. Such operations require substantial capital investment and production time.

A number of prior patents have addressed the formation of plastic containers from a plastic web and separation of the formed containers from the web.

U.S. Patent No. 2,953,814 discloses a method and apparatus for forming cup-like containers and separating them from a parent sheet during a cooling cycle in the same operation by which the articles are formed. In the method and apparatus of the '814 patent, a plastic sheet is clamped in a frame, heated to a moldable condition, and positioned between an upper platen providing a male molding form and a lower platen comprising a trim die. When the plastic sheet is in moldable condition, it is raised to engage and be formed by the male molding form. The male molding form is provided with passageways connected to a vacuum source to vacuum-form the plastic sheet on the male molding form. The lower platen is then moved upwardly and squeezes the plastic material surrounding the cup-like containers into a bead-forming portion of the male molding form. The male molding form is then moved downwardly to sever the molded articles from the plastic sheet with the trim die. Compressed air applied to the passageways of the male molding form can be used to expel the molded containers. Formation of the bead may be assisted by vacuum passageways leading to the bead forming surface of the male molding form and a tapered annular lower surface of the upper platen.

U.S. Patent No. 3,321,562 discloses a method and apparatus for, at a single station, forming a cup-like container from a heated web of thermoplastic material, such as polystyrene, severing the formed container from the web and providing an enlarged peripheral rim. In the method and apparatus of the '562 patent, a heated web is clamped around the mold, the web is pressure-formed into the cup-like shape, and the formed container is severed from web and clamped by a cutting edges and tapered surfaces, respectively, on the male and female mold portions, as they move into engagement. Because the male and female mold portions form an annular cavity between their cutting edges and tapered clamping surfaces, the cut edge of the container, which is free to move in the annular cavity, undergoes "hot-cut snapback" and provides an enlarged rim portion for the container.

U.S. Patent No. 3,830,616 discloses vacuum forming thermoplastic cups with a sheet metal vacuum-forming mold. In the method and apparatus of the '616 patent, a sheet of the plastic material, such as polyester, is heated to its deformation temperature, vacuum-formed in a sheet metal mold heated by hot air, and cooled to solidify the thermoplastic film in the shape of the mold by cooling the sheet metal mold with cool air. The formed cup-like article is then positioned over a cutting jig to remove the surrounding material.

U.S. Patent No. 4,039,641 discloses method and apparatus for producing plastic bottles from heat settable plastics, such as polyethylene terephalate, by stretching a parison with compressed gas against the walls of a heated split mold and maintaining it in contact with the heated walls and then cooling the formed plastic bottle by either cooling the mold walls or injecting a cooling liquid into the bottle.

U.S. Patent No. 4,381,909 discloses an improved apparatus for forming drawn, tray-like containers from separate paper-board forms coated on one side with a heat degradable, liquid impermeable material such as thermoplastic polyesters, e.g. polyethylene terephalate, and other such materials. In the apparatus a heated mold mandrel is moved into engagement with a heated mold to clamp and seal the edges of a coated paperboard form therebetween and to press the paperboard form into the container shape. The heated mandrel is provided with valved passageways for air, and pressurized air is forced through the mandrel into the space between the mandrel and the coated surface, as the mandrel approaches a closed position, to provide an air film and a protective thermal barrier between the mandrel and the coated surface of the paperboard form as the mold is fully closed.

U.S. Patent No. 4,442,064 discloses a method and apparatus for trimming preformed articles from the connecting web remaining after their formation. In the method and apparatus of the '064 patent, a plurality of preformed articles on a web are approximately registered with respect to a plurality of punches having different heights carried by a single platen. The web is shaped to provide freedom of movement of the plurality of articles with respect to the plurality of punches, and then the articles are sequentially sheared from the web by punches of different heights as the platen is closed on a cutting die so that each article is provided with freedom of movement in positioning with respect to a punch and cutting die.

U.S. Patent No. 4,755, 129 discloses a trim in-place thermoforming method and apparatus in which plastic articles are simultaneously molded and separated from a thermoplastic web. In the method and apparatus of the '129 patent, the male mold member includes a fixed cutting blade and the female mold member is provided with a "floating" cutting blade having a surface engaging the surface of the fixed cutting blade to sever an article from a web after it has been formed between the two matching mold members. In the female mold member, the floating cutting blade is maintained within an annular recess by an inwardly extending surface of the female mold member but is free to move laterally.

Notwithstanding the increased need for a more effective and less expensive manufacturing method and apparatus, double seamable plastic containers are manufactured in multiple operations to obtain the requisite close flange dimensions required for reliable double seaming of a closure to the container opening.

### Disclosure of the Invention

This invention provides a plastic melt-phase forming method and apparatus for the manufacture of plastic containers with peripheral flanges coined and cut to precise thicknesses and widths in a single operation.

This invention is particularly directed to melt-phase forming applications as opposed to solid-phase pressure forming operations. In solid-phase pressure forming operations, the temperature of a thermoplastic web portion is usually at or near its glass transition temperature during container formation; however, in preferred operations of this invention, temperatures generally exceed the glass transition temperature, using certain polymers, for example, polypropylene, the forming operation takes place beyond about 335° F.

In the invention, a press adapted for forming plastic containers from thermoplastic web portions is provided with tooling that includes first and second mold elements provided with first and second coining and cooling surfaces at their peripheries. The first and second mold elements are moved by the press with respect to each other to close on and clamp a heated thermoplastic web portion between the first and second coining and cooling surfaces to coin the thermoplastic web portion surrounding the container portion to a predetermined thickness and shape. The tooling is provided with a cutting die surrounding one of the mold elements, and the first and second mold elements are moved together with respect to the cutting die while clamping the thermoplastic web with the predetermined coining thickness to sever the resulting container from the thermoplastic web portion. In preferred embodiments of the tooling the surrounding die member is provided with an inner frustoconical annular surface adapted to a engage the outer cutting edge of one of the mold elements and align the outer cutting edge of the mold element with the cutting die. Preferably the mold element with the cutting edge is slideably carried by the press and free to radially with respect to the cutting die.

In the invention the press provides a first means for carrying the first mold element, a second means for carrying the second mold element and a third means for holding the heated thermoplastic web portion between the first and second mold elements. The first means can comprise a first mold element having a container forming cavity and a peripheral first coining and cooling surface, and the second means can comprise a second mold element having a peripheral second coining and cooling surface. The press drive moves the second means and second coining and cooling surface of the second mold element to a predetermined coining distance from the first coining and cooling surface of the first mold element with the heated thermoplastic web portion therebetween. The apparatus includes a fourth means for limiting the travel of the second means with respect to the first means to the predetermined coining distance. Preferably such fourth means comprises a coin limiting surface of said second means and a coin limiting surface of said first means that engage after the drive means has moved the second coining and cooling surface within the predetermined coining distance of the first coining and cooling surface. The first mold element is slideably carried by the first means and movable with respect to the first means of the press along the axis of movement of the drive means but is spring biased in the direction of the second means. After engagement of the coin-limiting surfaces of the first and second means, the drive means thereafter moves both the first and second mold elements while their coin limiting surfaces maintain the predetermined coining distance between the first and second coining and cooling surfaces.

To provide a precise flange width, the first mold element is surrounded by a cutting die which is so located along the axis of movement of the drive means that upon engagement of the coin limiting surfaces of the first and second means, the drive means drives the first and second mold elements into the cutting die. As noted above the cutting die can be provided with an inner frustoconical surface and the second mold element can have an outer cutting edge surrounding the second coining and cooling surface, slideably carried by the second means and free to move radially with respect to the cutting die so that the cutting edge of the second mold element will be radially aligned with the cutting die by its engagement with the inner frustoconical surface of the cutting die.

In a thermoforming method of manufacturing a plastic container having a peripheral flange portion adapted for sealing around a central container portion, the invention thus provides the improvement comprising coining the peripheral portion to precise thickness by pressing the peripheral portion while hot between two coining and cooling surfaces shaped to form the peripheral portion with precise thickness for double seamed sealing to a closure, and thereafter cutting the peripheral portion to a precise diameter by moving the two coining and cooling surfaces with the peripheral portion clamped with the precise thickness therebetween with respect to a surrounding cutting member.

### Brief Description of the Drawings

Fig. 1 is a diagrammatic front view of one embodiment of a press apparatus for forming a double seamable plastic container;
Fig. 2 is a cross-sectional drawing of the press apparatus of Fig. 1 including the invention, taken at a plane through the center of the apparatus that includes the longitudinal axis of movement of the press, during an early stage of its operation;
Fig. 3 is the Fig. 2 cross-section of the press apparatus during final formation of the central container portion of the plastic container;
Fig. 4 is the Fig. 2 cross-section of the press apparatus during its operation to coin the peripheral double seaming portion of the plastic container;
Fig. 5 is the Fig. 2 cross-section of the press apparatus during its operation to cut the peripheral double seaming portion of the plastic container;
Fig. 6 is a part of the Fig. 2 cross-section of the press apparatus during its operation to eject the completed plastic container;
Fig. 7A and 7B, respectively, show one mold element of the tooling of the press apparatus of Figs. 1-6 and a partial cross-sectional view of the portion of the element forming its coining and cooling surface and cutting edge;
Fig. 8 is a partial cross-sectional view of the mold element of Figs. 7A and 7B and the other mating mold element, corresponding to the operation shown in Fig. 4, showing the cooperation of the coining and cooling surfaces of the mold elements in coining and forming the peripheral double seaming portion of the plastic container;
Fig. 9 is a partial cross-sectional view corresponding to Fig. 8 and the operation shown in Fig. 5, showing the cooperation of the mold elements and cutting die in cutting the peripheral double seaming portion of the plastic container;
Fig. 10 is a partial cross-sectional view of a cutting die and the mold element with the cutting edge adapted in a preferred embodiment to provide automatic axial alignment of the cutting edge with the cutting die (the other mold element having omitted for clarity);
Fig. 11 is an outline drawing for showing preferred dimensions of the tooling of the invention; and
Fig. 12 is a partial cross-section of another embodiment of the tooling of the invention including an additional cooling ring.

### Description of the Best Mode of the Invention

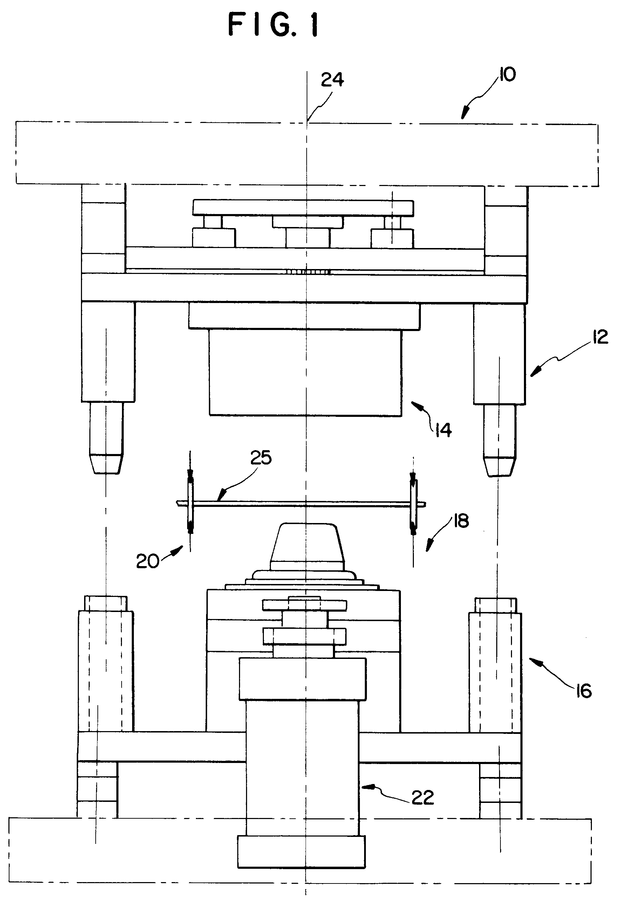

Fig. 1 is a diagrammatic front view of one embodiment of a press apparatus 10 that may be used for forming double seamable plastic containers. As known in the art, such a press apparatus includes a first means 12 for carrying for a first mold element 14, a second means 16 for carrying a second mold element 18 and a third means 20 for holding a thermoplastic web portion 25 between the first and second mold elements 14, 18.

While Fig. 1 shows one form of a press apparatus that may be used with my invention, it should be understood that my invention may be incorporated into many different types of press apparatus currently in use in the formation of plastic containers. Such press apparatus generally comprise a first means for carrying one mold element and a second means for carrying a second mold element, although the individual parts comprising the first and second means of such various press assemblies differ from press to press. For this reason all of the parts shown in the Figs. are not part of the invention and are not described in detail. All presses, in addition to the first and second means, comprise drive means to move the first and second means, and the first and second mold elements carried by the first and second means into engagement. Such drive means can drive either the first means and first mold element, or the second means and second mold element, or both means and both mold elements. As shown in fig. 1, the first means 12 and second means 16 are supported by structures shown in phantom lines, and the drive means can include a hydraulic cylinder (not shown) which drives the second means 16 upwardly along an axis 24 through the center of the apparatus.

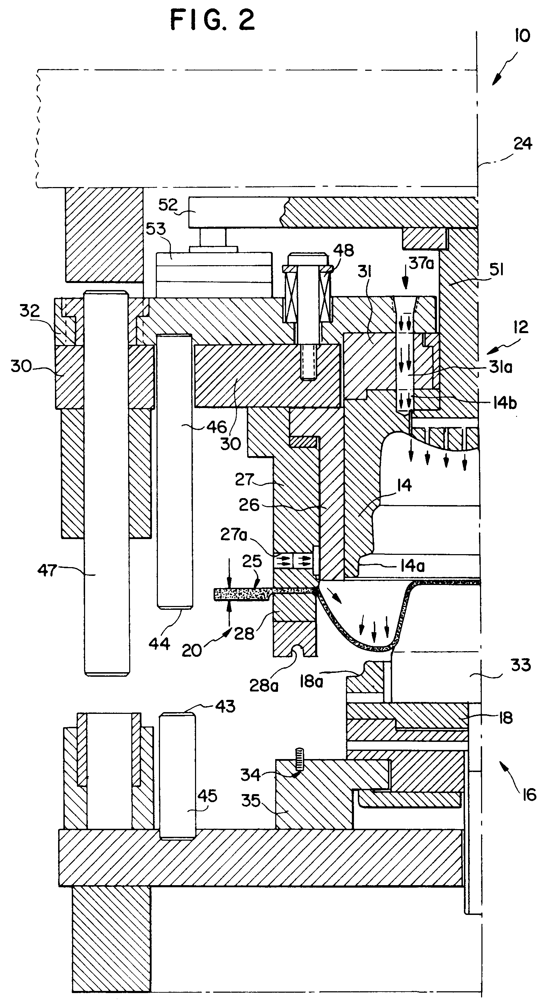

The invention is the result of incorporation of coining and cooling surfaces into first and second mold elements carried by the first and second means, and the formation of a peripheral double seaming container flange portion by moving the first and second coining and cooling surfaces to a predetermined coining distance to deform the container forming material, which has been heated above its glass transition temperature, therebetween so that the two coining and cooling surfaces form the double seaming peripheral flange of the container to a precise thickness and cool the formed peripheral flange, and thereafter moving the two coining and cooling surfaces with the formed peripheral portion of the container therebetween into a cutting die to cut the peripheral flange of the container to a precise diameter for double seaming. In the invention such tooling cooperates with a fourth press apparatus means (not shown in Fig. 1) for limiting the movement of the mold elements forming the first and second coining and cooling surfaces with respect to each other to the predetermined coining distance. Figs. 2-12 and the descriptions that follow show and explain the invention in greater detail.

Figs. 2-5 are partial cross-sectional drawings of the press apparatus of Fig. 1, including the invention, taken at the plane through the center of the apparatus that includes the longitudinal axis 24 of movement of the press. Fig. 2-5 show the apparatus at various stages of its operation including the steps of this invention.

Prior to being clamped by the third means 20, the thermoplastic web portion 25 is heated above its glass transition temperature. For example where extruded thermoplastic composites include layers of oxygen impermeable copolymers, such as ethylene vinyl alcohol (EVOH), polyvinylidene chloride (PVDC), or any other oxygen-barrier thermoplastic material, is heated to a temperature range between 335° F. and 425° F. so that the material is completely melted but retains sufficient viscosity and rigidity to resist flow due to gravitational force. Whatever the plastic material to be used in the invention, it is heated to a temperature where it will flow or deform in response to relatively low pressures.

Thus, as shown in Fig. 2, the thermoplastic web portion 25 from which a plastic container is formed is heated to such temperatures, in excess of its glass transition temperature and clamped by the third means 20 surrounding the tooling of this invention. The basic parts of the tooling of the invention include first mold element 14, the second mold element 18 and a cutting die 26 surrounding the first mold element 14.

Fig. 2 shows a operation known in the art as "prebillowing". As shown in Fig. 2, the third means 20 for clamping the thermoplastic web portion includes an upper clamp member 27 and a lower clamp member 28. The lower clamp member 28 is actuated upwardly by a pneumatic air cylinder (not shown) to clamp the thermoplastic web portion 25 against the upper clamp member 27 before prebillowing process takes place. The upper clamp member 27 is fastened to and sealed against a fixed die shoe 30 and is provided with a passageway 27a connected to a regulated source of compressed air (not shown). As also shown in Fig. 2, the first mold element 14 includes a passageway 14b in communication with a passageway 31a in a spacer block 31 and a passageway 32a in a floating die shoe 32. The passageways 14b, 31a and 32a are also connected with a pressure regulated source of air (not shown). As indicated in Fig. 2, during the prebillowing operation, air at low pressure is delivered from a compressed air source to the passageway 27a of the upper clamp member 27 and the passageways 14b, 31a and 32a leading to and through the first mold element 14, and the pressure of the air introduced through these latter passageways acts upon the upper surface of the thermoplastic web portion 25, deforming it downwardly onto a plug assist member 33 carried by the second means 16 of the press assembly.

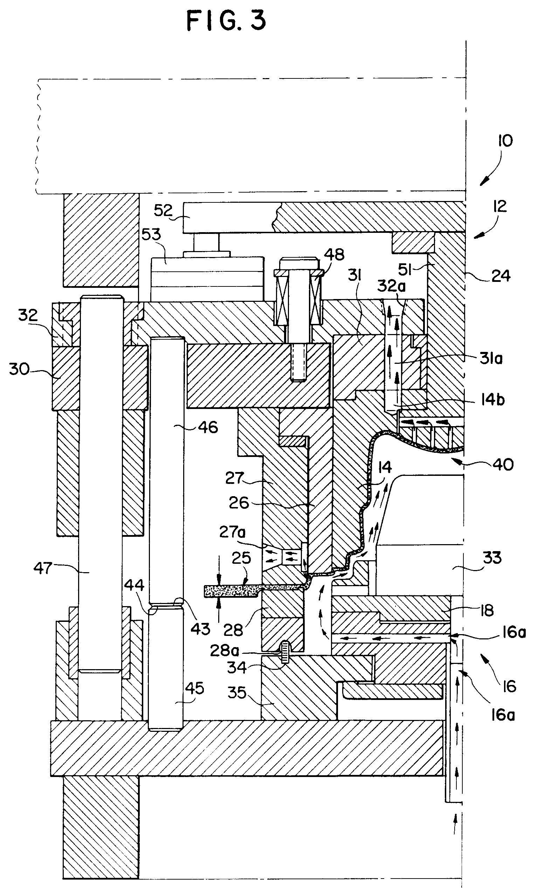

Fig. 3 shows an operation of the press assembly following the prebillowing operation of Fig. 2. As shown in Fig. 3, the second means 16 has been driven upwardly by the press drive means until a seal member 34 carried by the lower tool mounting base 35 meets with a seal-engaging lower surface 28a on the lower clamp 28. At this point in the operation of the apparatus, air from the regulated source of high pressure air is introduced into a series of passageways 16a formed in the second means 16 and in the tooling carried by the second means 16. The flow of compressed air through the passageways 16a imposes a pressure on the underside of the thermoplastic web portion 25. At the same time, passageways 27a and 14b, 31a and 32a are connected to a vacuum source (not shown) to withdraw air from above the upper portion of the thermoplastic web portion 25. In response to the pressure and vacuum, the thermoplastic web portion 25 is deformed to mate the container-forming cavity of the first mold element 14, thereby forming the central container portion 40 of the plastic container.

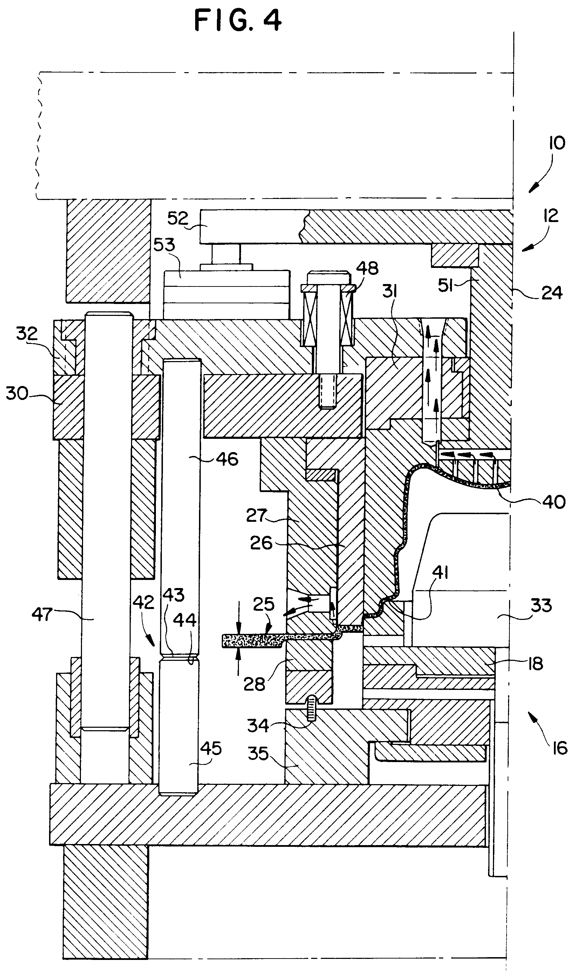

In accordance with the invention a peripheral flange portion is then formed about the periphery of the container portion 40 as shown in Fig. 4. Following the formation of the central container portion 40, which can be accomplished in no more than five seconds, the press drive means moves the second mold element 18 upwardly towards the first mold element 14 clamping and forming a peripheral flange portion 41 around the periphery of the central container portion 40 of thermoplastic web portion 25.

As shown in Fig. 4, the press apparatus includes a fourth means 42 for limiting the travel of the second mold element 18 with respect to the first mold element 14. Such a fourth means includes coin limiting surface 43 carried by, and forming part of, the second means 16 and a coin limiting surface 44 carried by, and forming part of, the first means 12. In the apparatus shown in Fig. 4, the coin limiting surfaces 43 of the second means and 44 of the first means may be the ends of elongated rods 45 and 46, respectively, carried by the second and first means, respectively, of the press apparatus.

As more clearly shown in Fig. 2, the first element 14 has been provided in the invention with a first coining and cooling surface 14a and the second mold element 18 has been provided with a second coining and cooling surface 18a. The first coining and cooling surface 14a and second coining and cooling surface 18a have been machined into the first mold element 14 and second mold element 18 with the shape desirable in the formation of a peripheral flange. As shown in Fig. 4, when the drive means of the press moves the second mold element 18 upwardly into engagement with the hot thermoplastic web portion 25, the portion of the hot thermoplastic web around the central container portion 40 is deformed to a thickness equal to a precise predetermined coining thickness, which is determined in the press apparatus of Fig. 4 by the lengths of rods 45 and 46. As peripheral flange portion 41 of the container is coined between surfaces 14a and 18a, it is cooled below its glass transition temperature by conduction of heat from the thermoplastic web portion 25 into the first and second mold members 14 and 18 respectively, thereby fixing the shape and thickness of the peripheral flange portion 41 of the plastic container.

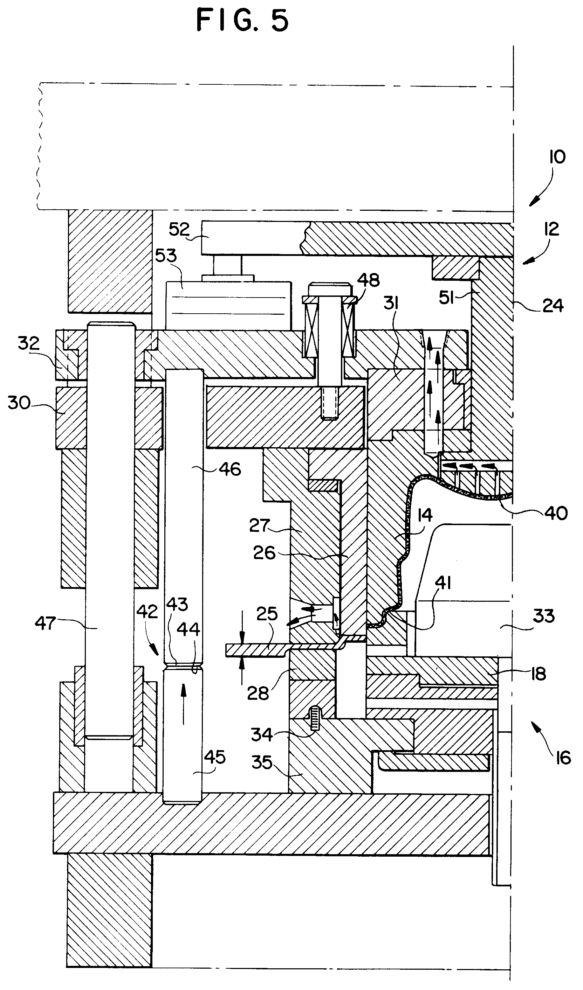

In the invention the peripheral flange portion 41 is then cut to a precise diameter. As shown in Fig. 5, the press drive means continues to drive the second mold element 18 upwardly; however, the press drive means also drives the first mold member 14 upwardly with the second mold member 18 while their coining and cooling surfaces 14a and 18a, respectively, are maintained at the predetermined coining thickness because of the engagement of coin limiting surfaces 43 and 44 of the second and first means 16 and 12, respectively.

As shown in Figs. 4 and 5, rod 46 which forms coin limiting surface 44 is suspended from the floating die shoe 32. The floating die shoe 32 is slideably carried on rods 47 of the first means 12. The first mold element 14 is carried by the floating die shoe 32 through space block 31 and is thus free to slide along a drive axis 24 of the press assembly with respect to the cutting die 26 and the clamping element 27 which are carried by fixed die shoe 30.

As shown in Figs. 2-4, the floating die shoe 32 is biased downwardly against the fixed die shoe 30 by a compression spring 48 which maintains the first mold element in the position shown in Figs. 2-4 in the absence of contact between the coin-limiting surfaces 43 and 44 of the second and first means. However, as shown in Fig. 5, as the drive means of the apparatus drives the second means upwardly it drives rod 45 and its coin limiting surface 43 into engagement with rod 46 and its coin limiting surface 44, and through engagement of the coin limiting surfaces 43 and 44, it drives rod 46 upwardly overcoming the force of the compression spring 48 and driving the floating die shoe 32 and attached first mold element 14 upwardly while maintaining the predetermined coining separation between the first and second coining and cooling surfaces 14a and 18a respectively.

As shown in Fig. 5, the press drive means thus drives the first and second mold elements 14 and 18 upwardly within the cutting die 26, which remains fixed, while the coining and cooling surfaces 14a and 18a clamp and carry peripheral flange portion 41 and sever it at a precise diameter from the remainder of the thermoplastic web portion 25, thereby completing, through the operation of the invention. This invention is particularly adapted for and useful in the formation of a peripheral double seamable flange having a precise shape and thickness and a precise outer diameter.

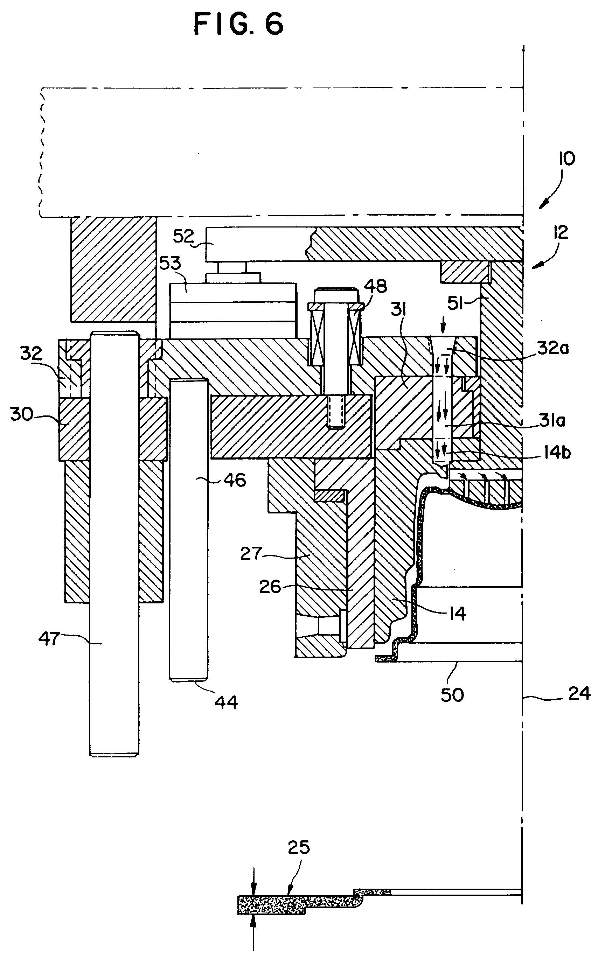

Fig. 6 shows the operation to eject the completed plastic container 50. In Fig. 6, the press drive has reversed its direction and carried the second means of the press (not shown in Fig. 6) at a sufficiently remote distance to allow ejection of the completed plastic container 50. In the press apparatus shown in Fig. 6, the first means 12 of the press assembly is provided with an ejector insert 51 carried by an ejector actuation plate 52 and a plurality of air cylinders 53 (only one of which is shown in Fig. 6). When the drive means has moved the second means 16 sufficiently remote from the first means 12 to permit ejection of the container, compressed air is applied to the air cylinders 53 to drive the ejector insert 51 downwardly to kick the container 50 free from the first mold element 14. At the same time a flow of compressed air may be provided to the passageways 32a, 31a and 14b to assist the ejection of the completed part.

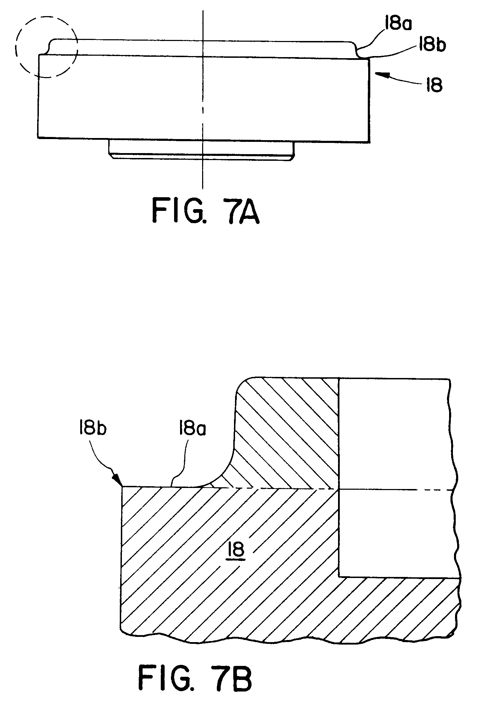

Fig. 7A is a drawing of the second mold element 18, or punch, which is provided with a outer cutting edge 18b surrounding the coining and cooling surface 18a for forming a double seaming flange inwardly thereof. The second mold element 18 may be formed in one piece or two, as shown in Fig. 7A. Fig. 7B is an enlarged cross-sectional view of the coining and cooling surface 18a and cutting edge 18b.

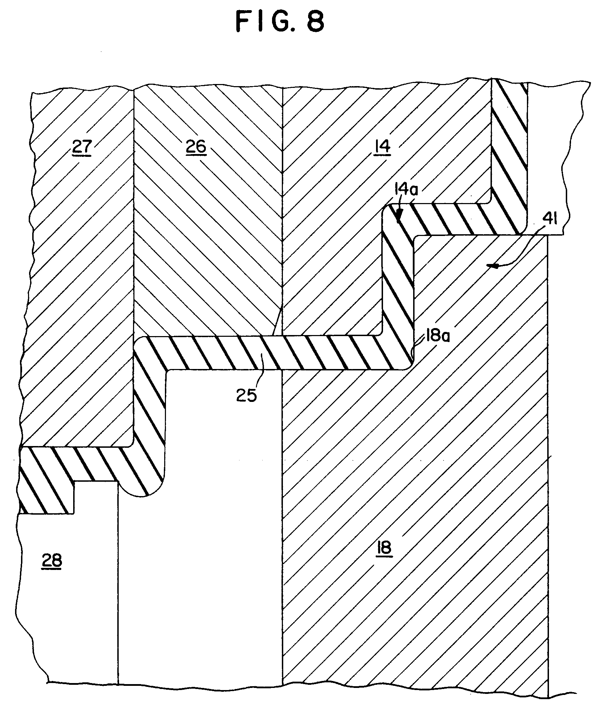

Fig. 8 is an enlarged partial cross sectional view of the first and second mold elements 14 and 18 when closed to the coining position. Fig. 8 thus shows, in an enlarged fashion, the engagement of the first and second coining and cooling surfaces 14a and 18a respectively with the thermoplastic web portion, corresponding to the engagement shown in Fig. 4.

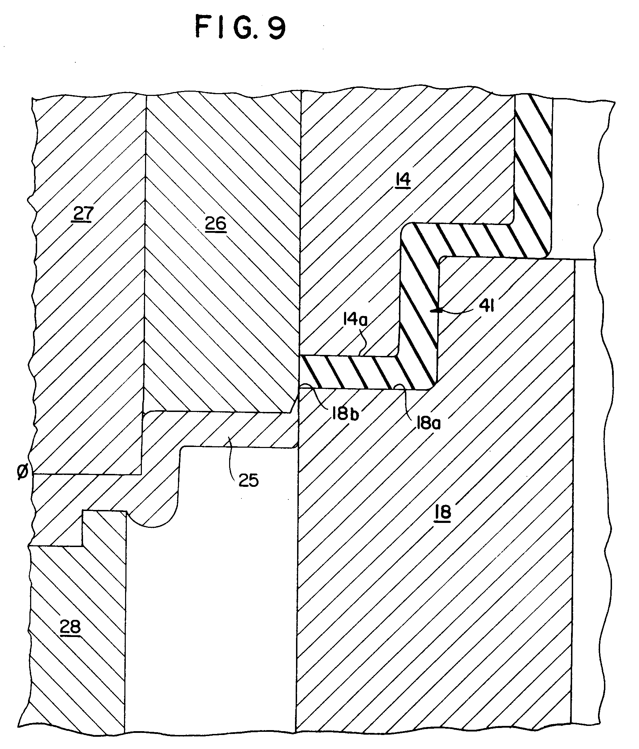

Figs. 8 and 9 show how in the invention, the first and second coining and cooling surfaces 14a and 18a engage the thermoplastic web portion to coin and shape a peripheral double seamable flange and cut the coined and formed double seamable flange to a precise diameter. The engagement of the first and second coining and cooling surfaces 14a and 18a with the thermoplastic web portion 25 cools the thermoplastic web portion 25 to permanently form a double seamable flange 41 as shown in Fig. 8. As shown in an enlarged fashion in Fig. 9 in the invention, the first and second mold elements 14 and 18 are both moved while maintaining the precise predetermined coining distance between the first and second coining and cooling surfaces 14a and 18a, and the peripheral double seamable flange portion in 41 is clamped between the first and second coining and cooling surfaces 14a and 18a and carried upwardly into the cutting die 26. The cutting edge 18b of second mold element 18 engages the cutting die 26 cutting the double seamable flange 41 to the precise diameter of the cutting die 26 and severing the completed plastic container 50 from the remainder of the thermoplastic web portion 25.

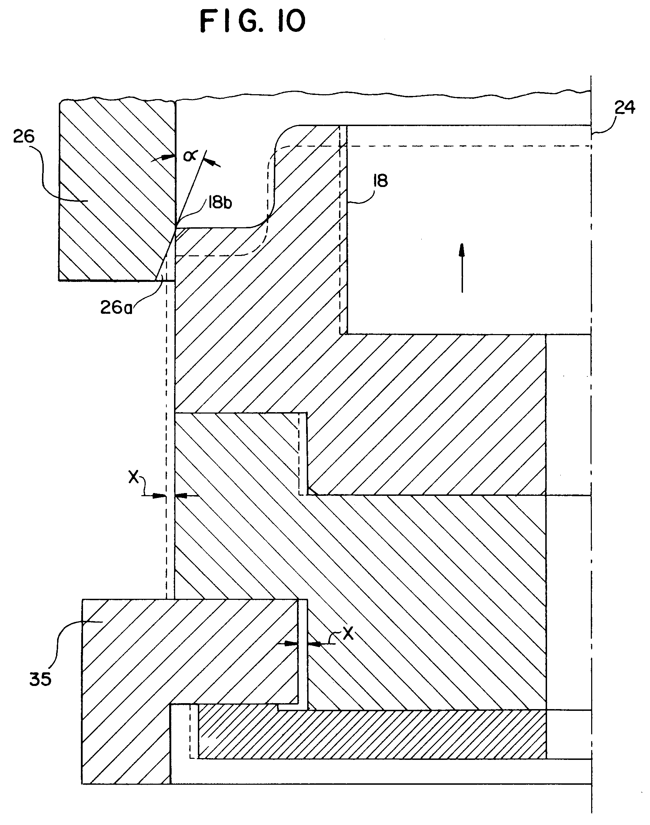

A preferred embodiment of the invention includes structure providing self-alignment of the cutting edge of one mold member with the cutting die. Such an embodiment is shown in Fig. 10 in which the cutting die 26 is provided with an inner frustoconical surface 26a adapted for engagement by the cutting edge 18b of the second mold element 18. As shown in Fig. 10, the second mold element 18 is slideably carried by the second means 16 so that it is free to move radially with respect to cutting die 26. Radially as used in this application means movement in a plane transverse to the axis of movement 24 of the drive means of a press apparatus. Thus, as the drive means of the press assembly drives the second mold element 18 upwardly, as shown in Fig. 10, any misalignment of the die, shown in phantom lines in Fig. 10, will be corrected by the engagement of the cutting edge 18b with the frustoconical surface 26a, which will slide the second mold element 18 radially, for example the shown distance x, to align the cutting edge 18b with the interior of the cutting die 26.

The frustoconical inner surface 26a of the cutting die 26 is preferably provided at an acute angle (alpha) with respect to the axis of movement 24, for example, as shown in Fig. 10, an angle alpha of about 1° to about 45°, and preferably about 5° to about 15°. For example, such a frustoconical inner surface formed to a depth of about 0.015 inches and with an acute alpha of about 7.5° provides good operation without tool damage.

Such self-aligning tooling features are important. The tooling clearances between the second mold member 18 and its outer cutting edge and the mating inner diameter of the cutting die are much tighter because of the much higher forming temperatures used in the invention. In addition, because of the higher temperatures used with the invention, one apparatus of the invention may be located closer to the heating oven, providing a greater temperature gradient between the front and the back of the tooling which can cause larger thermoexpansion and dimensional variations between tool sets and a greater possibility for tool misalignment.

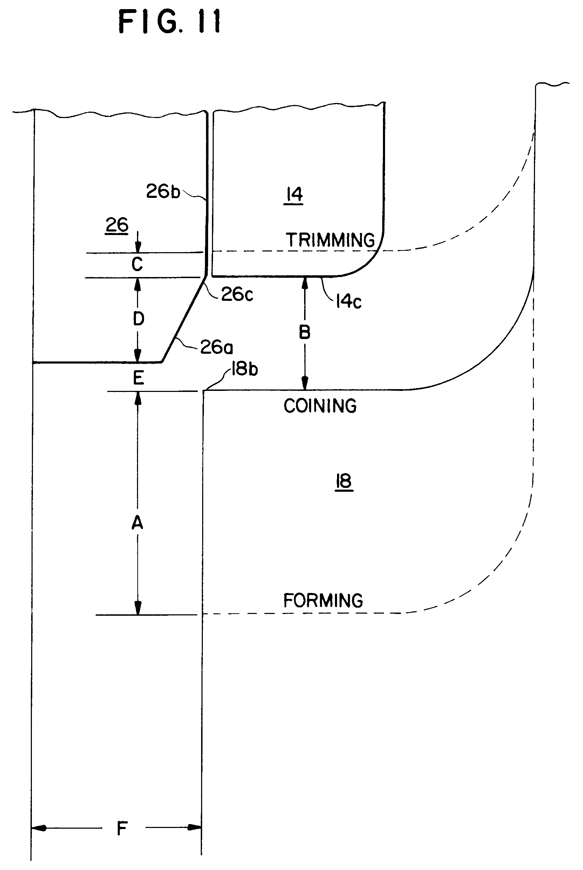

Fig. 11 is an outline of the engaging surfaces of the first and second mold elements 14 and 18 and cutting die 26 to provide an example of the dimensions and clearances important in the operation of my invention. For example, as shown in Fig. 11, it is desirable that the second mold element 18 travel a distance A which can be anywhere from about .001 to about .250 inches, but generally from about .01 to about .10 inches, and in the preferred apparatus shown is about .04 inches from its forming to its coining positions. The predetermined coining distance B can be anywhere from about the thickness of the starting gauge of the web portion 25 down to about .005 inches, but generally from about one-half of the thickness of the web portion 25 down to about .010 inches, and in the preferred apparatus shown is about .020 inches. In the cutting operation, the first and second mold elements 14 and 18 are moved upwardly until the cutting edge 18b of the second mold element 18 has been driven a distance C into the cutting die 26 which can be from zero to about .250 inches, but generally about zero to about .125 inches, and in the preferred apparatus shown is about .010 inches to sever the plastic container from the thermoplastic web portion. As noted before, it is desirable that the inner frustoconical annular surface 26a of the cutting die 26 have a depth D which can be from about .001 inches to about .250 inches, but generally from about .005 inches to about .125 inches, and in the preferred apparatus shown is about .015 inches, and that the lower outer corner 14c of the first mold element 14 be aligned with the intersection of the inner frustoconical surface 26a with the surface of 26b forming the inner diameter of the cutting die 26 as shown in Fig. 11. With such tooling, the distance E can be from the thickness of the web portion 25 to about zero, but generally from about one-half of the thickness of the web portion 25 to about zero, and in the preferred apparatus shown is about .007 inches and the distance F can be as large or about 2 inches to about .005 inches, but generally from about 1 inch to about .050 inches, and in the preferred apparatus shown is about .300 inches.

The relative positions described above combine for effective cutting. As shown in Fig. 11, the lower outer corner 14c of mold element 14 which forms the top of the double seamable flange lies right at the initial die trim line 26c. When the predetermined flange thickness is about 0.020 inches and the inner frustoconical cutting die surface 26a extends about 0.015 inches along the axis of movement 24 of the die members, a plastic thickness E of about 0.007 inches remains after the coining operation and before the final trimming operation. Because the thermoplastic web portion 25 is only about 0.007 inches thick, it cools rapidly by heat transfer to the cutting die and first and second mold elements. Such cooling is important for an effective cutting. If the coining and cooling surfaces 14a and 18a are below the die trim line 26c by a distance greater than, for example, .020 inches, additional cooling time is needed in order to obtain a clean-cut flange surface, and if the first and second coining and cooling surfaces 14a and 18a are moved upwardly until cutting edge 18b is only at the trim line 26c, a thin film of plastic may remain at the peripheral edge of the formed plastic container. Thus with improper location of the tooling surfaces, the thermoplastic web portion will form a thin film which stretches instead of yielding a sharp cut and a clean cut sharp edge. On the other hand, if the tooling surfaces are located so the thermoplastic web portion is allowed to be on the thick side, it requires a longer cooling time which increases the overall cycle time of the process. As set forth below an additional cooling may be added to further cool thick flange portions.

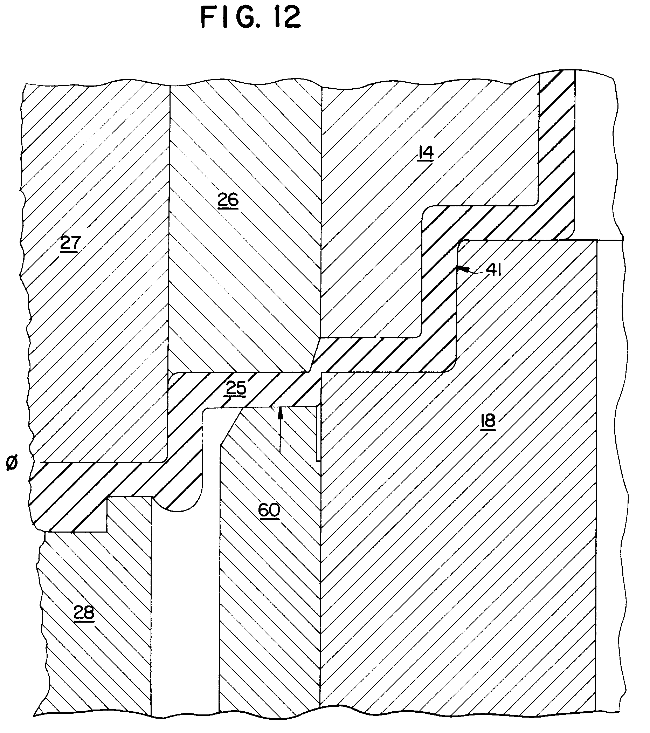

Fig. 12 shows another alternate embodiment of my invention including an additional cooling ring 60 which may be, as shown in Fig. 12, urged into contact with the thermoplastic web portion 25 to further cool the thermoplastic web portion 25 around a double seamable flange portion 41. The additional cooling ring 60 may be urged into contact with the thermoplastic web portion 25 by a compression spring or any other equivalent force producing means. The cooling ring will accelerate the cooling of the peripheral flange portion 41 prior to the cutting operation to improve the cutting precision and effectiveness.

While the invention has been explained in the context of a press apparatus in which the second mold element is moved upwardly for engagement and operation with the first mold element, the invention is equally applicable to press apparatus in which the direction of movement of the mold elements would be reversed so that the first mold element is moved downwardly to engage the second mold element and the cutting die. The invention may be used, for example, in a Irwin Magnum Thermoformer which can deliver 125 tons of force.

The invention can thus be used to produce lightweight double seamable containers that may be reliably double seamed to closures. The invention permits such containers to be manufactured with a single operation; capital investment cost can be reduced; and the manufacturing process can be simplified. The invention reduces product costs and can provide desirable plastic containers at high production rates with minimal capital investment.

Further, although the thermoplastic web material of this invention may well utilize thermoplastic polymeric materials, including mixtures and blends thereof, the method and apparatus of the invention may also utilize thermosetting polymer as well or combinations of thermoplastic polymers and thermosetting polymers. Still further, the web portion may be monolayered or multilayered.

Although the preferred embodiments of this invention relate to production of double seamable plastic containers to meet their required close tolerances, it will be appreciated that the invention is not limited to such and is well applicable to production of other plastic products such as trays, bowls, cups, etc., requiring other than double seaming, such as products that utilize heat sealing, induction sealing, adhesive sealing, etc., to produce them economically without substantial capital investment.

While the preceding description and drawings illustrate a preferred embodiment of the invention, this invention is not limited to the described and illustrated preferred embodiment, as will be apparent to those skilled in the art, and is limited only by the scope of the following claims and invention and the prior art.
The invention may be summarized as follows:
1. In a thermoforming method of manufacturing a plastic container having a peripheral portion adapted for closing a central container portion, the improvement comprising:
   coining said peripheral portion to precise thickness by pressing the peripheral portion while hot between two coining and cooling surfaces shaped to form the peripheral portion with a precise thickness for closing said plastic container; and thereafter cutting the peripheral portion to a precise diameter by moving the two coining and cooling surfaces with the peripheral portion clamped therebetween to said precise thickness with respect to a surrounding die member.
2. In the method of 1, the additional step of contacting the peripheral portion with an additional surrounding cooling member after the coining step and before the cutting step.
3. The method of 1 wherein said thermoforming method comprises the prior steps of:
   heating a web of thermoplastic material beyond its glass transition temperature; and
   deforming the web of thermoplastic materials to form said central container portion, said cutting step separating the formed plastic container from the web.
4. The method of 3 including the prior steps of clamping the web immediately surrounding the peripheral portion prior to the deforming step.
5. The method of claim 1 including the step of clamping the peripheral portion around said surrounding die member by a pair of clamping members prior to said coining step.
6. The method of 4 wherein the step of deforming the web of thermoplastic material to form the central container portion comprises the steps of:
   pressurizing one side of the web after clamping and sealing around the peripheral portion to preform the central container portion, and thereafter
   pressurizing the other side of the web while vacuum forming said one side of the web to deform the web to a container mold portion.
7. In tooling for a press adapted for thermoforming thermoplastic web portions into containers with flange portions, the improvement comprising:
   a first coining and cooling surface at the periphery of a first mold element;
   a second coining and cooling surface at the periphery of a second mold element;
   said first mold element and said second mold element being supportable on opposite sides of said thermoplastic web portion, said second mold element being movable with respect to the first mold element to clamp and coin the thermoplastic web portion to a predetermined shape and thickness between said first and second coining and cooling surfaces; and
   a cutting die surrounding the first mold element;
   said first and second mold elements being movable while clamping said thermoplastic web portion at said predetermined thickness, with respect to said cutting die.
8. The tooling of 7 wherein said second mold element has an outer cutting edge surrounding said second coining and cooling surface, and said surrounding die member has an inner frustoconical annular surface adapted to engage the outer cutting edge of the second mold member and align the outer cutting edge of the second mold member with the cutting die.
9. The tooling of the 8 wherein said second mold element is slideably retained and free to move radially with respect to said cutting die.
10. The tooling of 8 wherein said frustoconical inner surface of said cutting die extends for an axial length of up to about .250 inches and at an acute angle of about 5 to about 15 degrees with respect to axis of movement of said second mold member.
11. The tooling of 7 further comprising a cooling ring surrounding said second mold member and urged into contact with said thermoplastic web portion.
12. The tooling of 8 wherein the difference in the diameters of the cutting edge of the second mold element and the inner diameter of the cutting die is from about 0 inches to about the thickness of the thermoplastic web.
13. Apparatus for forming a plastic container from a thermoplastic material, comprising:
   first means for carrying a first mold element;
   second means for carrying a second mold element;
   a first mold element having a container-forming cavity and a peripheral first coining and cooling surface;
   a second mold element having a peripheral second coining and cooling surface; and
   drive means for moving said second means and said second coining and cooling surface of said second mold element to a predetermined coining distance from the first coining and cooling surface of said first mold element,
   said second means having a coin limiting surface engageable with a coin limiting surface of said first means after said drive means has moved said second coining and cooling surface within said predetermined coining distance of said first coining and cooling surface,
   said first mold element being slideably carried by said first means and movable along the axis of movement said drive means but spring biased on the direction of said second means, and
   said drive means, after engagement of the coin-limiting surfaces of said first and second means, thereafter moving both said first mold element and said second mold element while said coin-limiting surfaces maintain the predetermined coining distance between said first and second coining and cooling surfaces.
14. The apparatus of 13 wherein said first mold element is surrounded by a cutting die, said cutting die being so located along the axis of movement of the drive means that upon engagement of the coin limiting surfaces of the first and second means, said drive means drives said first and second mold elements into said cutting die.
15. The apparatus of 14 wherein said cutting die has an inner frustoconical surface, and said second mold element has an outer cutting edge surrounding said second coining and cooling surface and is slideably carried by said second means and free to move radially with respect to said cutting die, said cutting edge of said second mold element being engageable with the inner frustoconical surface of the cutting die for radial alignment thereby.
16. The apparatus of 13 further comprising third means for holding said thermoplastic material between said first and second mold elements.
17. The apparatus of 16 further comprising heating apparatus to raise the temperature of said thermoplastic material beyond its glass transition temperature.
18. Apparatus for forming a plastic container from a thermoplastic material, comprising:
   first means comprising a first mold element having a container-forming cavity and a peripheral first coining and cooling surface;
   a second mold element having a peripheral second coining and cooling surface; and
   drive means for moving said second mold element and said second coining and cooling surface to a predetermined coining distance from the first coining and cooling surface of said first mold element,
   said drive means thereafter moving both said first mold element and said second mold element while said first and second coining and cooling surfaces are maintained at the predetermined coining distance.
19. The apparatus of 18 wherein said first mold element is surrounded by a cutting die, and said drive means drives said first and second mold elements into said cutting die.
20. The apparatus of 19 wherein said cutting die has an inner frustoconical surface, and said second mold element has an outer cutting edge surrounding said second coining and cooling surface and is slideably carried by said drive means and free to move radially with respect to said cutting die, said cutting edge of said second mold element being engageable with the inner frustoconical surface of the cutting die for radial alignment thereby.
21. The apparatus of 20 wherein said frustoconical inner surface of said cutting die extends for an axial length of up to about .250 inches and at an acute angle of about 5 to about 15 degrees with respect to axis of movement of said second mold member.
22. The apparatus of 18 further comprising a cooling ring surrounding said second mold member and urged in the direction of said first mold member.
23. The apparatus of 20 wherein the difference in the diameters of the cutting edge of the second mold element and the inner diameter of the cutting die is from about 0 inches to about the thickness of the thermoplastic material.
24. The apparatus of 18 wherein said drive means includes a first coin limiting surface engageable with a second coin limiting surface after said drive means has moved said second coining and cooling surface within said predetermined coining distance of said first coining and cooling surface,
   said first mold element being slideably carried by said drive means and movable along the axis of movement said drive means but urged in the direction of said second means, and
   said drive means, after engagement of said first and second coin-limiting surfaces, thereafter moving both said first mold element and said second mold element while said coin-limiting surfaces maintain the predetermined coining distance between said first and second coining and cooling surfaces.

## Claims

1. In a thermoforming method of manufacturing a plastic container having a peripheral portion adapted for closing a central container portion, the improvement comprising:
coining said peripheral portion to precise thickness by pressing the peripheral portion while hot between two coining and cooling surfaces shaped to form the peripheral portion with a precise thickness for closing said plastic container; and thereafter cutting the peripheral portion to a precise diameter by moving the two coining and cooling surfaces with the peripheral portion clamped therebetween to said precise thickness with respect to a surrounding die member.

2. In the method of claim 1, the additional step of contacting the peripheral portion with an additional surrounding cooling member after the coining step and before the cutting step.

3. The method of claim 1 wherein said thermoforming method comprises the prior steps of:
heating a web of thermoplastic material beyond its glass transition temperature; and
deforming the web of thermoplastic materials to form said central container portion, said cutting step separating the formed plastic container from the web.

4. The method of claim 3 including the prior steps of clamping the web immediately surrounding the peripheral portion prior to the deforming step.

5. The method of claim 1 including the step of clamping the peripheral portion around said surrounding die member by a pair of clamping members prior to said coining step.

6. The method of claim 4 wherein the step of deforming the web of thermoplastic material to form the central container portion comprises the steps of:
pressurizing one side of the web after clamping and sealing around the peripheral portion to preform the central container portion, and thereafter
pressurizing the other side of the web while vacuum forming said one side of the web to deform the web to a container mold portion.

7. In tooling for a press adapted for thermoforming thermoplastic web portions into containers with flange portions, the improvement comprising:
a first coining and cooling surface at the periphery of a first mold element;
a second coining and cooling surface at the periphery of a second mold element;
said first mold element and said second mold element being supportable on opposite sides of said thermoplastic web portion, said second mold element being movable with respect to the first mold element to clamp and coin the thermoplastic web portion to a predetermined shape and thickness between said first and second coining and cooling surfaces; and
a cutting die surrounding the first mold element;
said first and second mold elements being movable while clamping said thermoplastic web portion at said predetermined thickness, with respect to said cutting die.

8. The tooling of claim 7 wherein said second mold element has an outer cutting edge surrounding said second coining and cooling surface, and said surrounding die member has an inner frustoconical annular surface adapted to engage the outer cutting edge of the second mold member and align the outer cutting edge of the second mold member with the cutting die.

9. Apparatus for forming a plastic container from a thermoplastic material, comprising:
first means for carrying a first mold element;
second means for carrying a second mold element;
a first mold element having a container-forming cavity and a peripheral first coining and cooling surface;
a second mold element having a peripheral second coining and cooling surface; and
drive means for moving said second means and said second coining and cooling surface of said second mold element to a predetermined coining distance from the first coining and cooling surface of said first mold element,
said second means having a coin limiting surface engageable with a coin limiting surface of said first means after said drive means has moved said second coining and cooling surface within said predetermined coining distance of said first coining and cooling surface,
said first mold element being slideably carried by said first means and movable along the axis of movement said drive means but spring biased on the direction of said second means, and
said drive means, after engagement of the coin-limiting surfaces of said first and second means, thereafter moving both said first mold element and said second mold element while said coin-limiting surfaces maintain the predetermined coining distance between said first and second coining and cooling surfaces.

10. Apparatus for forming a plastic container from a thermoplastic material, comprising:
first means comprising a first mold element having a container-forming cavity and a peripheral first coining and cooling surface;
a second mold element having a peripheral second coining and cooling surface; and
drive means for moving said second mold element and said second coining and cooling surface to a predetermined coining distance from the first coining and cooling surface of said first mold element,
said drive means thereafter moving both said first mold element and said second mold element while said first and second coining and cooling surfaces are maintained at the predetermined coining distance.
